# EUROPEAN PATENT APPLICATION

(11) **EP 4 826 279 A1**
(43) Date of publication of application: **21.10.2026**
(21) Application number: 26168482.3
(22) Date of filing: 27.03.2026
(51) Int. Cl.: F16H 57/04, F16H 57/02

(54) **AXLE ASSEMBLY HAVING AN INTERAXLE DIFFERENTIAL UNIT**

(30) Priority: 15.04.2025 GB 202505638
(71) Applicant: Meritor Heavy Vehicle Systems Cameri SpA, 28062 Cameri (NO) (IT)
(72) Inventor: Tiziani, Eugenio, Cameri (IT); Manjithaya, Guru Deepak R., Cameri (IT); Eranna, Nagaraja, Cameri (IT)
(74) Representative: Whitfield, Jack Stephen

(57) **Abstract**

An axle assembly is provided. The axle assembly comprises of an input shaft and an output shaft rotatable about an interaxle differential unit axis, with an interaxle differential unit positioned between the shafts. The assembly also includes a guiding arrangement that directs lubricating fluid to the interaxle differential unit and houses at least part of the output shaft.

## Description

### PRIORITY INFORMATION

This application claims priority to United Kingdom Patent Application 2505638.3 filed at the UKIPO on 15 April 2025 entitled Axle assembly having an interaxle differential unit.

### TECHNICAL FIELD

The present disclosure relates to an axle assembly having an interaxle differential unit.

### BACKGROUND

An axle assembly having an interaxle differential unit is disclosed in U.S. Pat. No. 9,816,603. It is known to provide an interaxle differential unit (IAD) to transfer torque from a first axle assembly to a further axle assembly. It is important for the IAD to be lubricated for longevity and function. Typically, an axle assembly is provided with a pumping arrangement or other lubricant channels to direct lubricating fluid that is splashed about the IAD nest, typically by a helical gear that rotates along with an input shaft, into the IAD nest itself.

The present invention aims to provide one or more improvements over the prior art.

### SUMMARY

According to an aspect of the present invention, an axle assembly is provided. The axle assembly comprises: an input shaft rotatable about an interaxle differential unit axis; an output shaft rotatable about the interaxle differential unit axis; an interaxle differential unit arranged between the input shaft and the output shaft; and a guiding arrangement for directing lubricating fluid to the interaxle differential unit, wherein the guiding arrangement at least partially houses the output shaft.

The guiding arrangement directs lubricant fluid along the output shaft to lubricate the interaxle differential unit, which helps to enhance the longevity and performance of the interaxle differential unit. As the output shaft is typically located in a region of the axle assembly that is already lubricated, no additional pumps or lubricating paths are needed solely for the interaxle differential unit, simplifying the axle assembly.

The axle assembly may comprise a differential carrier housing, the differential carrier housing defining: an interaxle differential unit chamber for supporting the interaxle differential unit; and a differential assembly chamber for supporting a differential assembly which is in communication with the input shaft for transferring torque to at least one axle shaft of the axle assembly. The output shaft may extend between the interaxle differential unit chamber and the differential assembly chamber. The lubricating fluid may be directed along the output shaft to the interaxle differential unit chamber by the guiding arrangement.

The guiding arrangement enables lubricating fluid from a sump portion of an axle housing for lubricating the differential assembly to also be used to lubricate the interaxle differential unit.

The guiding arrangement may be at least partially defined by the interaxle differential unit chamber; and a bearing end cap for supporting the differential assembly. The bearing end cap may be located in the differential assembly chamber and fixed to the differential carrier housing.

The bearing end cap has dual functionality as it supports the differential assembly as well as helping to direct lubricating fluid to the interaxle differential unit.

The bearing end cap may comprise: a first aperture arranged about a differential axis that is perpendicular to the interaxle differential unit axis, the first aperture being configured to support the differential assembly; and a second aperture arranged about the interaxle differential unit axis. The output shaft may pass through the second aperture. Lubricating fluid may be directed along the output shaft towards the interaxle differential unit.

The first aperture may locate a ring gear bearing for supporting a ring gear of the differential assembly. The bearing end cap may be configured such that when the ring gear rotates through a sump portion of an axle housing in use, lubricating fluid is at least partially directed through the second aperture of the bearing end cap towards the interaxle differential unit.

The bearing end cap is configured so the ring gear directs fluid through the second aperture without it being necessary to provide a pump or other directing arrangement.

The interaxle differential unit chamber may comprise an output shaft bearing support portion adjacent the mouth portion.

As the output shaft bearing support portion is located adjacent the mouth portion, the lubricating fluid directed by the guiding arrangement is 'pumped' into the interaxle differential unit by an output shaft bearing.

The second aperture of the bearing end cap may extend from a first face of the bearing end cap to a second face of the bearing end cap. The second face may be located adjacent the interaxle differential unit mouth portion.

As the second aperture passes all the way through a portion of the bearing end cap, the lubricating fluid can pass from the differential assembly chamber to the interaxle differential unit chamber.

The second aperture may define a first cross-sectional profile. The first cross-sectional profile may increase from the first face of the bearing end cap to the second face of the bearing end cap.

The increasing cross-sectional profile helps to direct the lubricating fluid towards the interaxle differential unit.

The mouth portion of the interaxle differential unit chamber may define a second cross-sectional profile. The second cross-sectional profile may increase from a mouth first end of the mouth portion adjacent the bearing end cap to a mouth second end of the mouth portion adjacent the output shaft bearing support portion of the interaxle differential unit chamber.

As the mouth portion also has an increasing cross-sectional profile, a smooth transition is defined from the differential assembly chamber to the interaxle differential unit chamber.

The second cross-sectional profile may continue from the first cross-sectional profile. The first cross-sectional profile and second cross-sectional profile may increase at a substantially linear rate such that the guiding arrangement tapers radially outwardly from the first face of the bearing end cap to the mouth second end of the mouth portion.

This defines a substantially continuous slope that directs lubricating fluid and can also help to increase its velocity, e.g. under gravity, to help it pass through the output shaft bearing and into the interaxle differential unit.

The interaxle differential unit may include: an input shaft side gear that is rotatable about the interaxle differential unit axis with the input shaft; an output shaft side gear that is rotatable about the interaxle differential unit axis with the output shaft; a spider that is rotatable about the interaxle differential unit axis with the input shaft; a pinion gear that is rotatably disposed on the spider and that meshes with the input shaft side gear and the output shaft side gear; a case that encircles at least the pinion gear and the spider, the case having a case first end and a case second end; and an output shaft bearing arranged on the output shaft side gear adjacent the case second end. The case may have an opening at the case second end, the opening being configured to receive lubricating fluid passing through the output shaft bearing.

The opening at the case second end may have a diameter that is greater than the outer diameter of the output shaft bearing.

The case helps to ensure that lubricating fluid passing through the output shaft bearing, which has been directed there by the guiding arrangement, lubricates the interaxle differential unit.

The case may comprise a lip portion at the case second end. The lip portion may extend axially in the direction of the output shaft bearing.

The lip portion of the case helps to direct lubricating fluid exiting the output shaft bearing into the interaxle differential unit.

The output shaft side gear may comprise a plurality of lubricant channels for lubricating fluid.

The lubricant channels help to ensure that the lubricating fluid is not blocked from entering the interaxle differential unit from the output shaft bearing.

The lubricant channels may be circumferentially distributed around the output shaft side gear. The lubricant channels may extend radially from an outer circumference of the output shaft side gear.

This helps to ensure that the lubricating fluid can pass through the output shaft side gear gear, but the lubricant channels can be distributed between the teeth of the output shaft side gear, so its function is not negatively impacted.

Within the scope of this application, it is expressly intended that the various aspects, embodiments, examples and alternatives set out in the preceding paragraphs, in the claims and/or in the following description and drawings, and, in particular, the individual features thereof, may be taken independently or in any combination. All embodiments and/or features of any embodiment can be combined in any way and/or combination unless such features are incompatible. The applicant reserves the right to change any originally filed claim or file any new claim accordingly, including the right to amend any originally filed claim to depend from and/or incorporate any feature of any other claim, although not originally claimed in that manner.

Further benefits and advantages of the present invention will become apparent from the following detailed description of at least one exemplary embodiment for carrying out the present invention with reference to the accompanying drawings.

### BRIEF DESCRIPTION OF THE DRAWINGS

One or more embodiments of the invention will now be described, by way of example only, with reference to the accompanying drawings, in which:
FIG. 1 is a perspective view of an axle assembly in accordance with an embodiment of the invention;
FIG. 2 is a perspective view of the axle assembly of FIG. 1, from an opposite direction;
FIG. 3 is a partial cut-away view of FIG. 2;
FIG. 4 is a perspective view of a differential carrier housing and differential assembly of the axle assembly of FIG. 1;
FIG. 5 is a perspective view of FIG. 4 from a different direction and with the differential carrier housing omitted;
FIG. 6 is a cross-sectional view through the differential carrier housing and differential assembly shown in FIG. 4, through the plane 6-6;
FIG. 7 is a differential carrier housing of the axle assembly of FIG. 1;
FIG. 8 is an exploded perspective view showing components of an interaxle differential unit and bearing end cap of the axle assembly of FIG. 1:
FIG. 9 is a perspective view of the bearing end cap of FIG. 8;
FIG. 10 is a perspective view of an output shaft side gear of FIG. 8; and
FIG. 11 is a cross-sectional view through a case of the interaxle differential unit of FIG. 8, through the plane 11-11.

### DETAILED DESCRIPTION

One more more detailed embodiments of the present invention are described below. The embodiments are merely exemplary of the invention that may be embodied in various and alternative forms. The figures are not necessarily to scale; some features may be exaggerated or minimized to show details of particular components. Therefore, specific structural and functional details included in the description below are not to be interpreted as limiting, but merely as a representative basis for teaching a skilled person to variously employ the present invention.

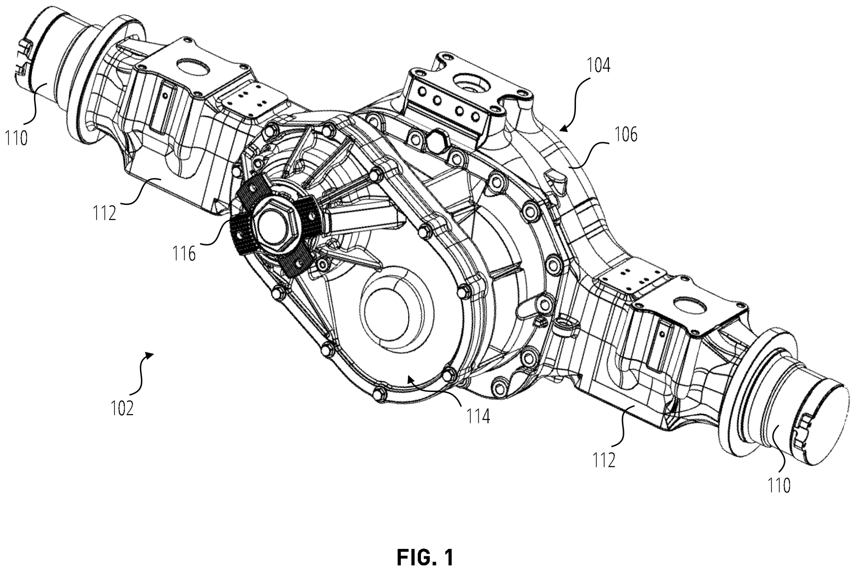

Referring to FIG. 1, an example of an axle assembly 102 is shown. The axle assembly may be provided with a vehicle of any suitable type, such as a truck, bus, farm equipment, military transport or weaponry vehicle, or cargo loading equipment for land, air, or marine vessels.

The axle assembly 102 may be part of a vehicle drivetrain that may include multiple axle assemblies that may be connected in series. For instance, the axle assembly may be part of a tandem axle drivetrain configuration that may include two axle assemblies connected in series. The axle assembly that is operatively connected to at least one torque source, such as an electric motor or an internal combustion engine, or that is disposed closest to a torque source may be referred to as a first axle assembly. The axle assembly that receives propulsion torque from the torque source through or by way of the first axle assembly may be referred to as a second axle assembly. In FIG. 1, the axle assembly 102 is depicted as being a first axle assembly.

In this embodiment, the axle assembly 102 provides torque to its associated wheel assemblies (not shown) as well as providing torque to the second axle assembly (not shown). In this embodiment, and as will be described in more detail below, the axle assembly 102 includes an axle housing 104, a differential carrier housing 114, an input yoke 116, an input shaft 118, an interaxle differential unit 120, a differential assembly 122, at least one axle shaft 124, an output shaft 126, an output yoke 128, or combinations thereof.

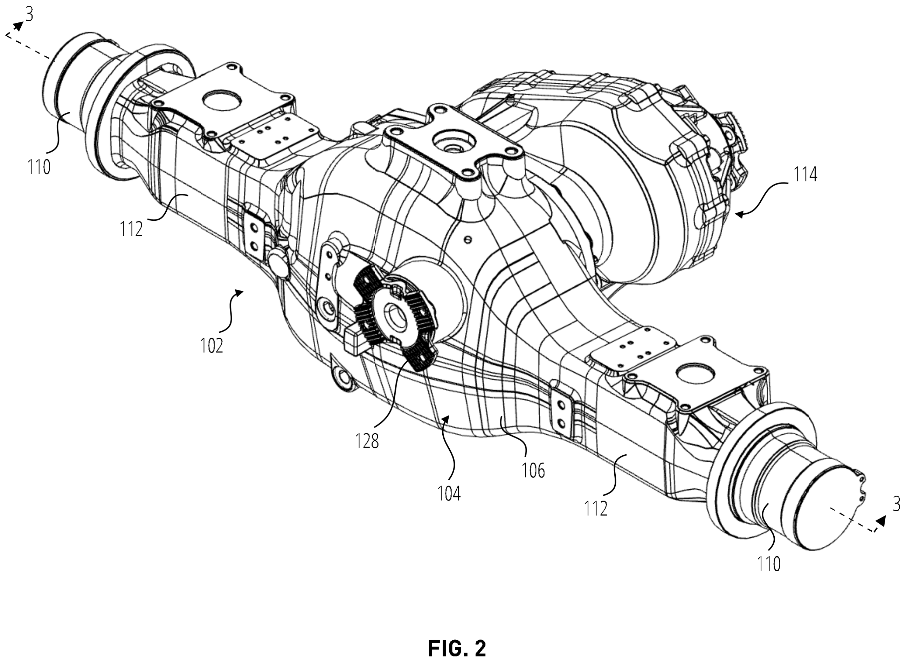

Referring to FIG. 1, FIG. 2 and FIG. 3, the axle housing 104 may receive various components of the axle assembly 102. In addition, the axle housing 104 facilitates mounting of the axle assembly 102 to the vehicle. The axle housing 104 has a centre portion 106 and first and second arm portions 112 extending from opposite sides of the centre portion. Wheel hubs 110 are arranged at the free ends of each arm portion 112, for mounting vehicle wheels (not shown). The differential carrier housing 114 is mounted to the axle housing 104. In this embodiment, the axle housing 104 and the differential carrier housing 114 each have corresponding flanges which are fixed together with bolts. However, it will be appreciated that any suitable removable or permanent fastening arrangement could be used.

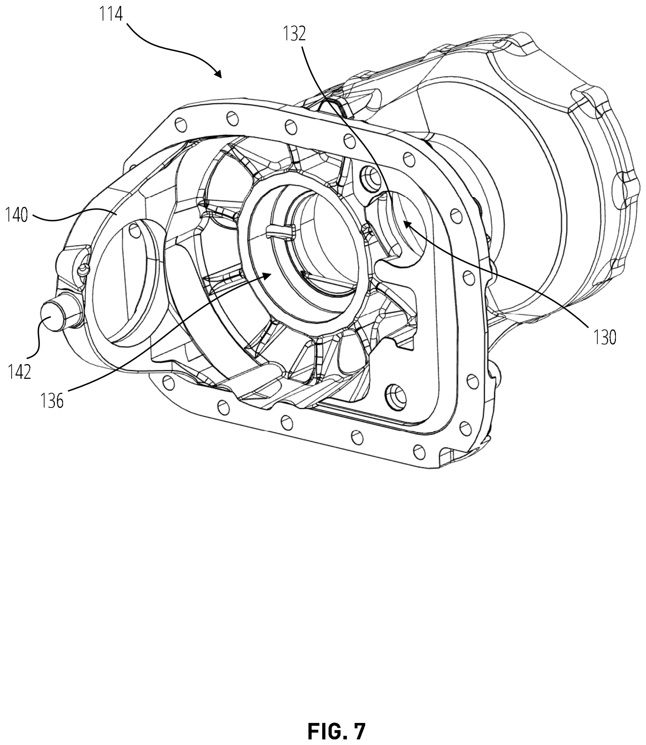

As will be described in more detail below, the differential carrier housing 114 supports the interaxle differential unit 120 and the differential assembly 122. The differential carrier housing 114 is shown in more detail in FIG. 7. The differential carrier housing 114 is typically a cast component, formed of cast iron or other suitable material. Within the differential carrier housing 114 are multiple features for supporting different components of the differential assembly 122 and the interaxle differential unit 120. In this embodiment, the differential carrier housing 114 defines an interaxle differential unit chamber 130 for supporting the interaxle differential unit 120; and a differential assembly chamber 136 for supporting the differential assembly 122.

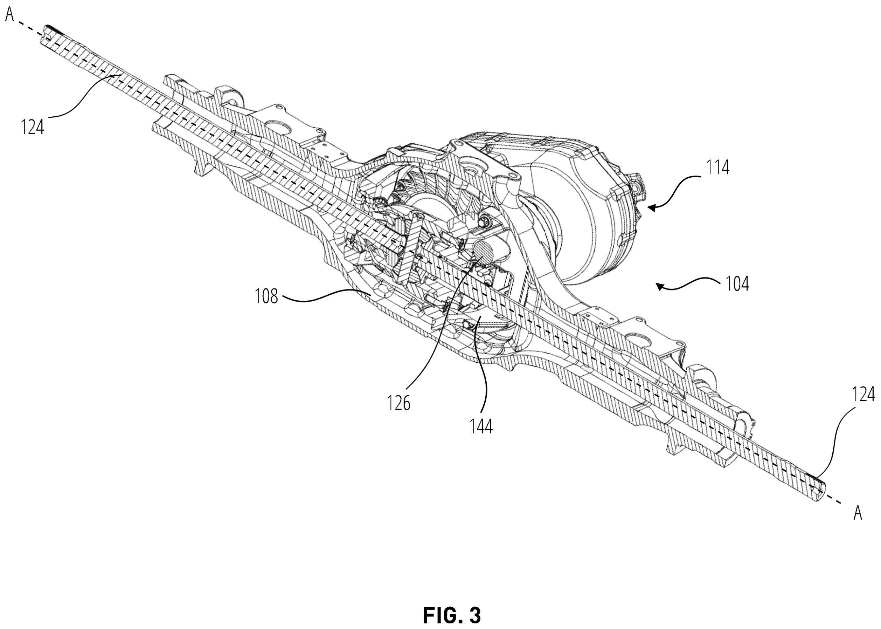

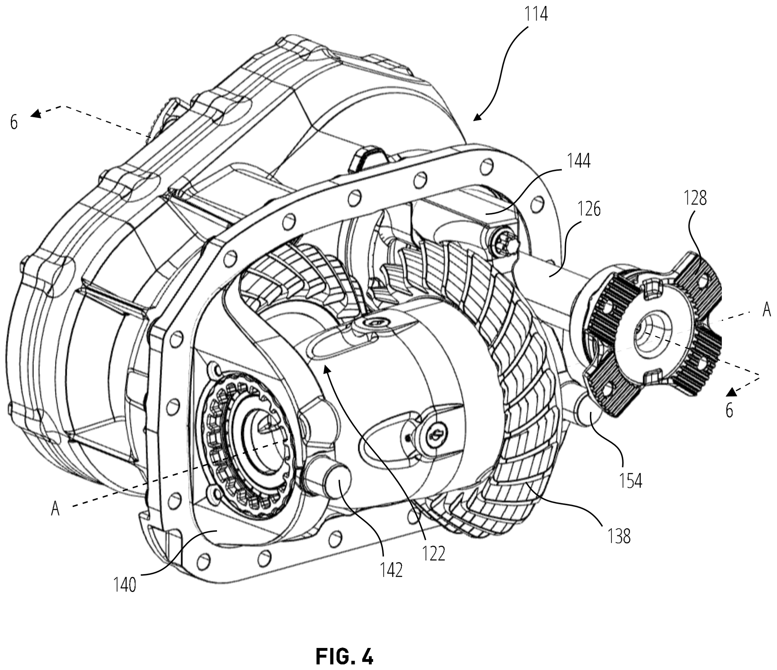

As can be seen most clearly in FIG. 4, in this embodiment, the differential assembly 122 projects from the differential carrier housing 114 such that is at least partially received in the axle housing 104. The differential assembly 122 transmits torque to the axle shafts 124 (see FIG. 3) and wheels (not shown). The differential assembly 122 is operatively connected to the axle shafts 124 and permits the axle shafts 124 to rotate at different rotational speeds in a manner known by those skilled in the art. In this embodiment, the differential assembly 122 includes a ring gear 138 that rotates about the axis A-A. The ring gear 138 is in communication with the input shaft 118 and transmits torque to the axle shafts 124 in a known manner. The ring gear 138 is located in the differential assembly chamber 136 and passes through a sump portion 108 as the ring gear 138 rotates in use. In this embodiment, the sump portion 108 is located in the centre portion 106 of the axle housing 104. As the sump portion 108 contains lubricating fluid, the ring gear 138 helps to splash the lubricating fluid around the axle housing 104 and the differential assembly chamber 136 of the differential carrier housing 114, to help lubricate the differential assembly 122.

The axle shafts 124, shown in FIG. 3, transmit torque from the differential assembly 122 to corresponding wheel hubs and wheels. The axle shafts 124 extend along and are rotatable about the axis A-A, which is a differential axis in this embodiment. The components of the differential assembly 122 which are arranged about the axis A-A are supported by first and second bearing arrangements.

As can be seen most clearly in FIG. 4, in this embodiment, the first bearing arrangement is at a first end of the differential assembly 122 and includes a first bearing portion 140 which is integrally formed with the differential carrier housing 114. The first bearing portion 140 locates a first differential bearing 156 and includes a first pin 142 which projects from the first bearing portion 140 and is received in a corresponding receiving recess (not shown) on the axle housing 104.

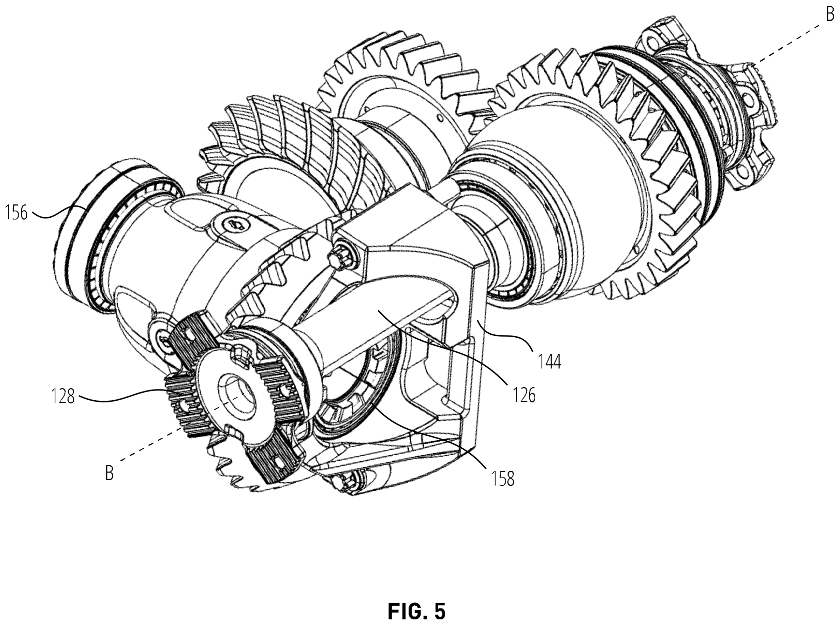

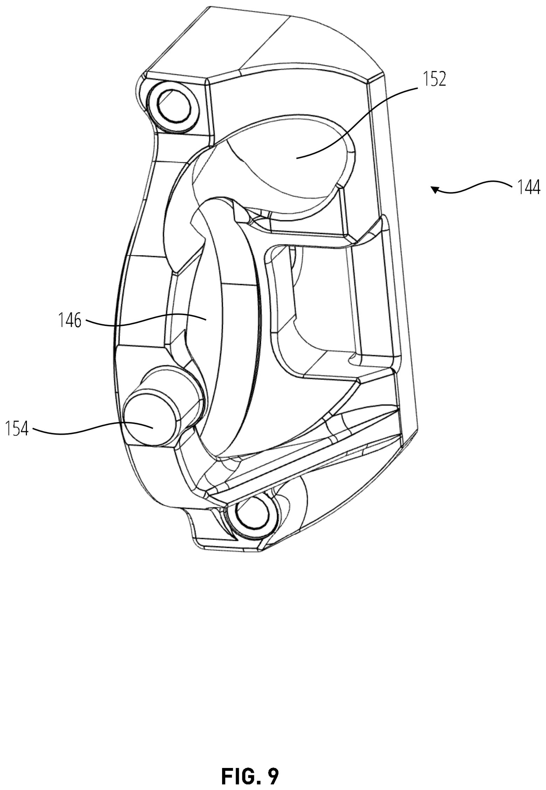

As can be seen most clearly in FIG. 4 and FIG. 5, the second bearing arrangement is at a second end of the differential assembly 122 and includes a second bearing portion in the form of a bearing end cap 144. The bearing end cap 144 is fixed to the differential carrier housing 114 and locates a second differential bearing, referred to as a ring gear bearing 158 in this embodiment. The bearing end cap 144 includes a second pin 154 which projects from the bearing end cap 144 and is received in a corresponding receiving recess (not shown) on the axle housing 104. The bearing end cap 144 is shown in FIG. 9 and will be described in more detail below.

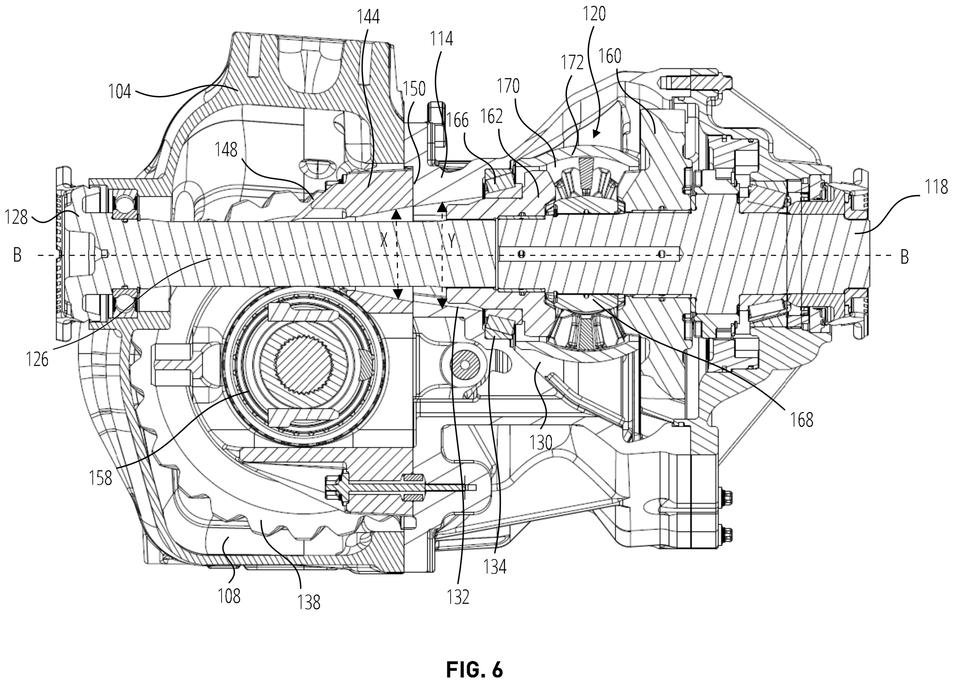

Referring to FIG. 5 and FIG. 6, the output shaft 126 extends along and is rotatable about an axis B-B, which is an interaxle differential unit axis in this embodiment. The interaxle differential unit axis B-B is perpendicular to the differential axis A-A. The output shaft 126 is supported by one or more bearings that may be disposed on the axle housing 104. The output shaft 126 is coupled to the interaxle differential unit 120. The output yoke 128 facilitates coupling of the axle assembly 102 to another axle assembly. The output yoke 128 is fixedly coupled to the output shaft 126 in any suitable manner, such as with mating splines and a fastener like a nut. The output yoke 128 may be operatively connected to a second axle assembly in any suitable manner, such as via a prop shaft.

The input yoke 116 facilitates coupling of the axle assembly 102 to a torque source. It is contemplated that the input yoke 116 may be omitted, such as when a torque source like an electric motor is integrated with the axle assembly 102. If provided, the input yoke 116 is operatively connected to the input shaft 118. The input shaft 118 extends along and is rotatable about the interaxle differential unit axis B-B. The input shaft 118 is rotatably supported by one or more bearings that may be disposed on the differential carrier housing 114. The input shaft 118 is operatively connected to the output shaft 126 via the interaxle differential unit 120. The input shaft 118 is also operatively connected to the differential assembly 122 in a known manner that will not be described in detail.

The interaxle differential unit 120 accommodates or compensates for rotational speed differences between different drive axle assemblies, such as speed differences between the axle assembly 102 and a second axle assembly that is connected in series with the axle assembly 102. In this embodiment, the interaxle differential unit 120 operatively connect the input shaft 118 and the output shaft 126 and allows the input shaft 118 and output shaft 126 to rotate at different speeds with respect to each other under various operating conditions. In this embodiment, the interaxle differential unit 120 is located in the interaxle differential unit chamber 130 of the differential carrier housing 114.

Referring to FIG. 6, in this embodiment, the interaxle differential unit 120 includes a first side gear 160, a second side gear 162, a spider 168, at least one pinion gear 170, and a case 172.

In this embodiment, the first side gear 160 is an input shaft side gear. The first side gear 160 is rotatable about the interaxle differential unit axis B-B and is selectively coupled to the input shaft 118. The first side gear 160 includes first side gear teeth arranged around the interaxle differential unit axis B-B that mate or mesh with the teeth of at least one pinion gear 170. The first side gear teeth are disposed inside the case 172.

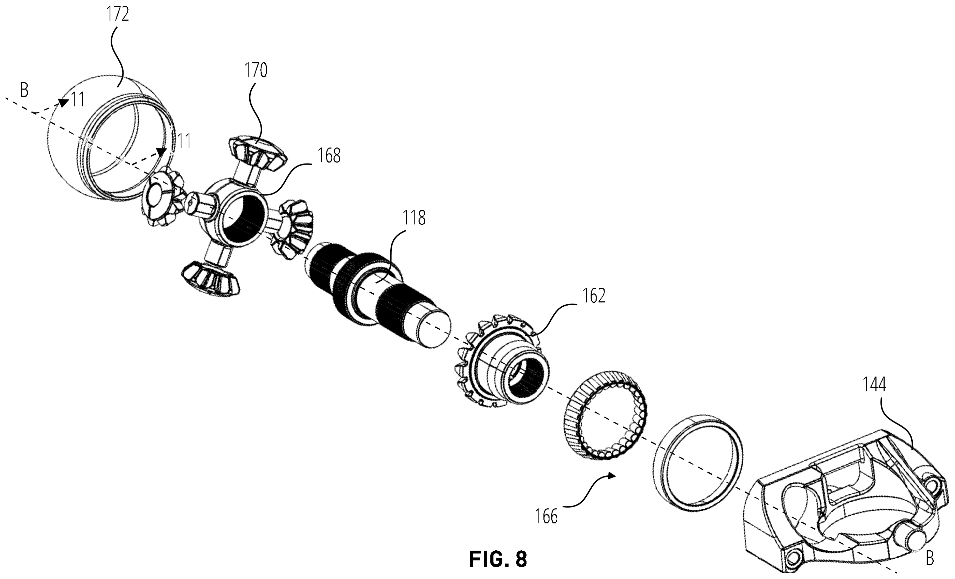

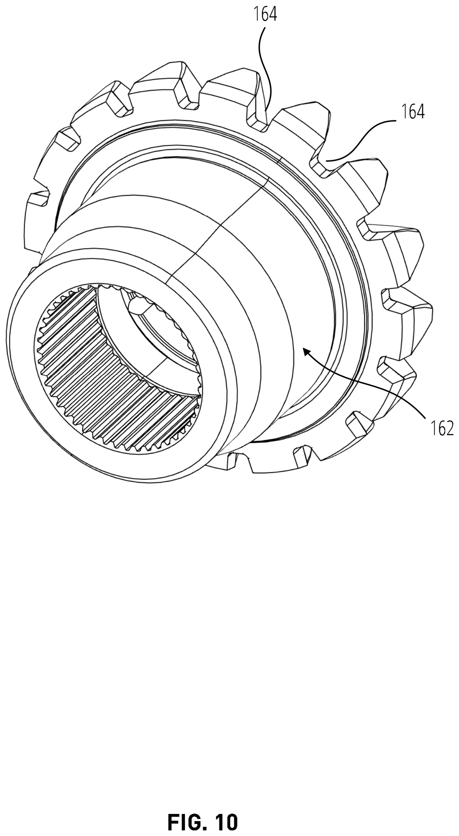

The second side gear 162 can be seen in more detail in FIG. 8 and FIG. 10. In this embodiment, the second side gear 162 is an output shaft side gear. The second side gear 162 is rotatable about the interaxle differential unit axis B-B with the output shaft 126. An output shaft bearing 166 is provided on the second side gear 162. In this embodiment, the second side gear 162 extends along the interaxle differential unit axis B-B and has a centre bore that receives or encircles an end of the output shaft 126 and an end of the input shaft 118. In this embodiment, the centre bore includes a spline or splined portion spaced apart from the input shaft 118 and that mate with a corresponding spline of the output shaft 126. As such, the second side gear 162 is inhibited from rotating about the interaxle differential unit axis B-B with respect to the output shaft 126.

In this embodiment, the second side gear 162 comprises a plurality of lubricant channels 164. The lubricant channels 164 are circumferentially distributed around the second side gear 162. In this embodiment, each lubricant channel 164 extends radially from an outer circumference of the second side gear 162 and help to ensure that the lubricating fluid can pass through the second side gear 162. The lubricant channels 164 are distributed between the teeth of the second side gear 162, so its function is not negatively impacted. Each of the lubricant channels 164 has a substantially U-shaped profile, to help ensure smooth flow through the second side gear 162. In other embodiments, the lubricant channels 164 might be between every alternate pair of teeth of the second side gear 162, or fewer. It will be appreciated, however, that the more lubricant channels 164, the better, as there will be less restriction of the flow into the interaxle differential unit 120.

The spider 168 is rotatable about the interaxle differential unit axis B-B with the input shaft 118. In this embodiment, the spider 168 includes a centre bore that includes a spline or splined portion that mates with a corresponding spline of the input shaft 118, to help inhibit the spider 168 from rotating about the interaxle differential unit axis B-B with respect to the input shaft 118. The spider 168 and the case 172 are rotatable with respect to each other. In this embodiment, the spider 168 is partially or completely received inside the case 172 and is rotatable about the interaxle differential unit axis B-B with respect to the case 172. The spider 168 also includes one or more pins that extend away from the centre bore of the spider 168.

One or more pinion gears 170 are rotatable with respect to the spider 168. In this embodiment, a pinion gear 170 is rotatably disposed on each pin of the spider 168. Each pinion gear 170 defines a hole that receives a corresponding pin in a manner that permits the pinion gear 170 to rotate about the pin. The pinion gear 170 includes teeth that mesh or mate with the first side gear teeth of the first side gear with teeth of the second side gear 162.

The case 172 receives components of the interaxle differential unit 120. The case 172 encircles at least a portion of the first side gear 160, the second side gear 162, the spider 168, the pinion gears 170, or combinations thereof.

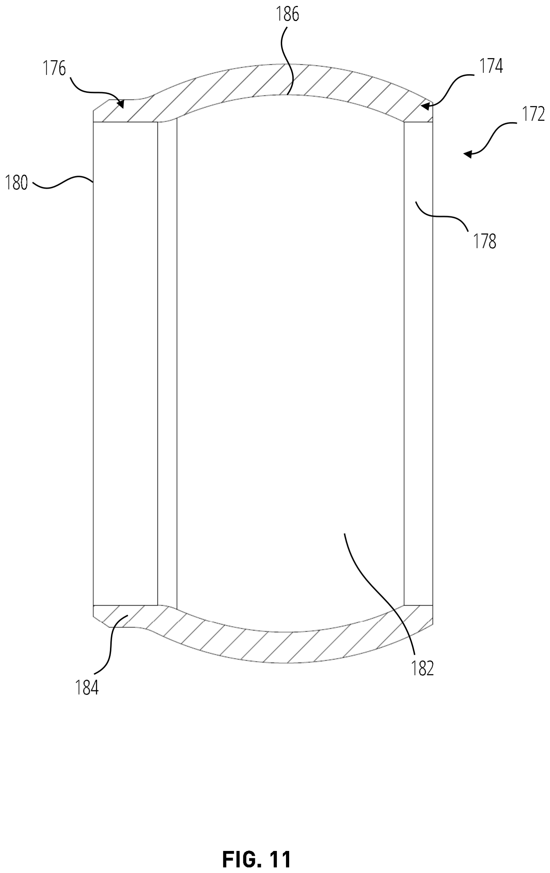

The case 172 can be seen in more detail in FIG. 8 and FIG. 11. In this embodiment, the case 172 is a single unitary one-piece component. The case 172 has a case first end 174, a case second end 176, a case first opening 178, a case second opening 180, and a case cavity 182.

In this embodiment, the case first end 174 faces toward the first side gear 160 or to the right from the perspective shown in FIG. 6. The case first end 174 extends around the interaxle differential unit axis B-B and encircles the case first opening 178.

The case second end 176 is disposed at an opposite end of the case 172 from the case first end 174. As such, the case second end 176 faces away from the first side gear 160. The case second end 176 extends around the interaxle differential unit axis B-B and encircles the case second opening 180.

Referring to FIG. 6, the case first opening 178 receives and encircles at least part of the first side gear 160. The case second opening 180 receives and encircle at least part of the second side gear 162.

The case cavity 182 is at least partially defined by a part-spherical surface 186. The part-spherical surface 186 extends between the case second end 176 and the case first end 174. The part-spherical surface 186 faces toward the interaxle differential unit axis B-B and encircles the spider 168 and at least a portion of the pinion gear 170. In this embodiment, the part-spherical surface 186 extends continuously around the interaxle differential unit axis B-B and is disposed at a substantially constant radial distance from a centre point positioned along the interaxle differential unit axis B-B. In this embodiment, the part-spherical surface 186 resembles a portion of a sphere and extends around a spherical segment, which may be a portion of a sphere that may be disposed between two substantially parallel planes that may be disposed substantially perpendicular to the interaxle differential unit axis B-B. The term "substantially perpendicular" is used herein to designate features or axes that are the same as or very close to perpendicular and includes features that are within ±2° of being perpendicular each other.

In this embodiment, the case 172 is fixedly coupled to the first side gear 160 in any suitable manner. As such, the first side gear 160 is not rotatable with respect to the case 172

The case 172 further comprises a lip portion 184 at the case second end 176. In this embodiment, the lip portion 184 surrounds the case second opening 180. The lip portion 184 extends axially in the direction of the output shaft bearing 166 when the interaxle differential unit 120 is located in the interaxle differential unit chamber 130. As will be described in more detail below, the lip portion 184 of the case 172 helps to direct lubricating fluid exiting the output shaft bearing 166 into the interaxle differential unit 120.

The interaxle differential unit 120 is located in the interaxle differential unit chamber 130 as previously described. A guiding arrangement is provided for directing lubricating fluid to the interaxle differential unit 120 from the differential assembly chamber 136. The guiding arrangement is at least partially defined by: the interaxle differential unit chamber 130; and the bearing end cap 144.

The bearing end cap 144 is shown in more detail in FIG. 9. It includes a first aperture 146 and a second aperture 152. The bearing end cap 144 has dual functionality as it supports the differential assembly 122 as well as helping to direct lubricating fluid to the interaxle differential unit 120.

The first aperture 146 is arranged about and encircles the differential axis A-A, and is configured to support the differential assembly 122. Specifically, the first aperture 146 locates the ring gear bearing 158 for supporting the ring gear 138 of the differential assembly 122.

The second aperture 152 is arranged about and encircles the interaxle differential unit axis B-B. Therefore, the second aperture 152 is arranged perpendicular to the first aperture 146. The output shaft 126 passes through the second aperture 152. The second aperture 152 of the bearing end cap 144 extends from a first face 148 of the bearing end cap 144 to a second face 150 of the bearing end cap 144.

The second aperture 152 defines a first cross-sectional profile. The first cross-sectional profile increases from the first face 148 of the bearing end cap 144 to the second face 150 of the bearing end cap 144. This can be seen most clearly in FIG. 6, where the dimension X represents the diameter of the second aperture 152. The increasing cross-sectional profile helps to direct the lubricating fluid towards the interaxle differential unit 120. The bearing end cap 144 is configured such that when the ring gear 138 rotates through the sump portion 108 of the axle housing 104 in use, lubricating fluid is at least partially directed through the second aperture 152 of the bearing end cap 144 towards the interaxle differential unit 120. The bearing end cap 144 is configured so the ring gear 138 directs fluid through the second aperture 152 without it being necessary to provide a pump or other directing arrangement. Lubricating fluid is directed along the output shaft 126 towards the interaxle differential unit 120.

The second face 150 of the bearing end cap 144 is located adjacent a mouth portion of the interaxle differential unit chamber. As the second aperture 152 passes all the way through a portion of the bearing end cap 144, the lubricating fluid can pass from the differential assembly chamber 136 to the interaxle differential unit chamber 130.

As seen most clearly in FIG. 6, the interaxle differential unit chamber 130 comprises a mouth portion 132 and an output shaft bearing support portion 134.

The mouth portion 132 of the interaxle differential unit chamber 130 defines a second cross-sectional profile. The second cross-sectional profile increases from a first end of the mouth portion 132 to a second end of the mouth portion 132. This can be seen most clearly in FIG. 6, where the dimension Y represents the diameter of the mouth portion 132.

The output shaft bearing support portion 134 is adjacent the mouth portion 132. The output shaft bearing support portion 134 extends around the interaxle differential unit axis B-B and defines a seat for the output shaft bearing 166. The output shaft bearing support portion 134 has a diameter that substantially equal to the outer diameter of the output shaft bearing 166. The output shaft bearing 166 is a taper roller bearing in this embodiment, so it can accept both radial and axial loads in use. The output shaft bearing 166 has an inner race and an outer race and a plurality of roller elements located between the inner race and the outer race. The outer diameter of the outer race of the output shaft bearing 166 is substantially equal to the diameter of the output shaft bearing support portion 134, so the outer race of the output shaft bearing 166 is rotatably fixed to the output shaft bearing support portion 134. The inner diameter of the inner race of the output shaft bearing 166 is substantially equal to the diameter of the second side gear 162, and the inner race of the output shaft bearing 166 is rotatably fixed to the second side gear 162. In this embodiment, the second side gear 162 has a shoulder portion to axially locate the output shaft bearing 166 in the appropriate location. As an example, in this embodiment, the output shaft bearing 166 selected has an outer diameter of 95mm, but the dimensions can vary to suit the dimensions of the axle assembly 102, which vary depending on the amount of power to be distributed as well as other factors.

The output shaft bearing 166 is selected such that the inner diameter of the outer race of the output shaft bearing 166 and the outer diameter of the inner race of the output shaft bearing 166 are angled to substantially correspond to the slope of the mouth portion 132 of the differential carrier housing 114, to define a continuous path to the interaxle differential unit chamber 130. The rolling elements of the output shaft bearing 166 correspond to the angled surfaces of the inner and outer race. The rolling elements are substantially cylindrical in this embodiment and reduce in cross-sectional area from the smallest inner diameter of the outer race of the output shaft bearing 166 to the largest inner diameter of the outer race of the output shaft bearing 166. In other words, the rolling elements reduce in cross-sectional area from the left side to the right side looking at Figure 6. This can help to increase the pumping action of the output shaft bearing 166 for the fluid passing through from the mouth portion 132 of the differential carrier housing 114.

In this embodiment, the diameter of the output shaft bearing support portion 134 is less than or equal to the diameter of the case second opening 180 and/or the lip portion 184 of the case 172. As the output shaft bearing support portion 134 is located adjacent the mouth portion 132, the lubricating fluid directed by the guiding arrangement is 'pumped' into the case 172 of the interaxle differential unit 120 by the output shaft bearing 166. The relative dimensions of the output shaft bearing 166, the output shaft bearing support portion 134 and/or the case second opening 180 help to ensure that the lubricating fluid is directed into the case 172. The lip portion 184 also helps to guide the lubricating fluid into the case 172.

The bearing end cap 144 is arranged adjacent the mouth portion 132 of the interaxle differential unit chamber 130. As the bearing end cap 144 is arranged adjacent the mouth portion 132, the lubricating fluid directed through the second aperture 152 of the end cap is directed into the mouth portion 132 of the interaxle differential unit chamber 130. The first end of the mouth portion 132 is adjacent the bearing end cap 144 and the second end of the mouth portion 132 is adjacent the output shaft bearing support portion 134 of the interaxle differential unit chamber 130. As the second cross-sectional profile increases from the first end to the second end, a smooth transition is defined from the differential assembly chamber 136 to the interaxle differential unit chamber 130.

In this embodiment, the second cross-sectional profile of the mouth portion 132 continues from the first cross-sectional profile of the second aperture 152. The first cross-sectional profile and second cross-sectional profile increase at a substantially linear rate such that the guiding arrangement tapers radially outwardly from the first face 148 of the bearing end cap 144 to the second end of the mouth portion 132. This defines a substantially continuous slope that directs lubricating fluid and can also help to increase its velocity, e.g. under gravity, to help it pass through the output shaft bearing 166 and into the interaxle differential unit 120.

The output shaft 126 typically has a diameter between 40 and 60mm. In this embodiment, the diameter of the output shaft 126 is 55mm with a minimum clearance with the second aperture 152 of the bearing end cap 144 of around 3mm. It will be appreciated that the dimensions can be varied as appropriate depending upon the requirements of the axle assembly 102.

An axle assembly 102 as described above allows lubricating fluid to be directed along the output shaft 126 to the interaxle differential unit chamber 130 from the sump portion 108 of the axle housing 104 by the guiding arrangement. In addition, as the output shaft 126 passes directly through the bearing end cap 144, the differential carrier housing 114 width may be reduced, thereby reducing package space and weight.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

Where the word 'or' appears, this is to be construed to mean 'and/or'. This is such that items referred to are not necessarily mutually exclusive and may be used in any appropriate combination.

The invention has been described above with reference to one or more specific embodiments. However, the description is not exhaustive, and the present invention is not limited to the embodiments described. Various changes and modifications can be made without departing from the scope of the invention as defined in the claims. For example, (insert any alternatives not yet mentioned here).

## Claims

1. An axle assembly comprising:
an input shaft rotatable about an interaxle differential unit axis;
an output shaft rotatable about the interaxle differential unit axis;
an interaxle differential unit arranged between the input shaft and the output shaft; and
a guiding arrangement for directing lubricating fluid to the interaxle differential unit,
wherein the guiding arrangement at least partially houses the output shaft.

2. The axle assembly of claim 1, comprising a differential carrier housing, the differential carrier housing defining:
an interaxle differential unit chamber for supporting the interaxle differential unit; and
a differential assembly chamber for supporting a differential assembly which is in communication with the input shaft for transferring torque to at least one axle shaft of the axle assembly,
wherein the output shaft extends between the interaxle differential unit chamber and the differential assembly chamber, and the lubricating fluid is directed along the output shaft to the interaxle differential unit chamber by the guiding arrangement.

3. The axle assembly of claim 2 wherein the guiding arrangement is at least partially defined by:
the interaxle differential unit chamber; and
a bearing end cap for supporting the differential assembly, the bearing end cap being located in the differential assembly chamber and fixed to the differential carrier housing.

4. The axle assembly of claim 3, wherein the bearing end cap comprises:
a first aperture arranged about a differential axis that is perpendicular to the interaxle differential unit axis, the first aperture being configured to support the differential assembly; and
a second aperture arranged about the interaxle differential unit axis, wherein the output shaft passes through the second aperture and lubricating fluid is directed along the output shaft towards the interaxle differential unit.

5. The axle assembly of claim 4, wherein the first aperture locates a ring gear bearing for supporting a ring gear of the differential assembly, the bearing end cap being configured such that when the ring gear rotates through a sump portion of an axle housing in use, lubricating fluid is at least partially directed through the second aperture of the bearing end cap towards the interaxle differential unit.

6. The axle assembly of claim 4 or 5, wherein the interaxle differential unit chamber comprises a mouth portion, wherein the bearing end cap is arranged adjacent the mouth portion of the interaxle differential unit chamber.

7. The axle assembly of claim 6, wherein the interaxle differential unit chamber comprises an output shaft bearing support portion adjacent the mouth portion.

8. The axle assembly of claim 7, wherein the second aperture of the bearing end cap extends from a first face of the bearing end cap to a second face of the bearing end cap, wherein the second face is located adjacent the interaxle differential unit mouth portion.

9. The axle assembly of claim 8, wherein the second aperture defines a first cross-sectional profile, the first cross-sectional profile increasing from the first face of the bearing end cap to the second face of the bearing end cap.

10. The axle assembly of claim 9, wherein the mouth portion of the interaxle differential unit chamber defines a second cross-sectional profile, the second cross-sectional profile increasing from a mouth first end of the mouth portion adjacent the bearing end cap to a mouth second end of the mouth portion adjacent the output shaft bearing support portion of the interaxle differential unit chamber.

11. The axle assembly of claim 10, wherein the second cross-sectional profile continues from the first cross-sectional profile, the first cross-sectional profile and second cross-sectional profile increasing at a substantially linear rate such that the guiding arrangement tapers radially outwardly from the first face of the bearing end cap to the mouth second end of the mouth portion.

12. The axle assembly of any one of claims 1 to 11, wherein the interaxle differential unit includes:
an input shaft side gear that is rotatable about the interaxle differential unit axis with the input shaft;
an output shaft side gear that is rotatable about the interaxle differential unit axis with the output shaft;
a spider that is rotatable about the interaxle differential unit axis with the input shaft;
a pinion gear that is rotatably disposed on the spider and that meshes with the input shaft side gear and the output shaft side gear;
a case that encircles at least the pinion gear and the spider, the case having a case first end and a case second end; and
an output shaft bearing arranged on the output shaft side gear adjacent the case second end,
wherein the case has an opening at the case second end, the opening being configured to receive lubricating fluid passing through the output shaft bearing, optionally wherein the opening at the case second end has a diameter that is greater than the outer diameter of the output shaft bearing.

13. The axle assembly of claim 12, wherein the case comprises a lip portion at the case second end, the lip portion extending axially in the direction of the output shaft bearing.

14. The axle assembly of claim 12 or 13, wherein the output shaft side gear comprises a plurality of lubricant channels for lubricating fluid.

15. The axle assembly of claim 14, wherein the lubricant channels are circumferentially distributed around the output shaft side gear, optionally wherein the lubricant channels extends radially from an outer circumference of the output shaft side gear.
